(19) Europäisches Patentamt
European Patent Office
Office européen des brevets

(11) **EP 4 389 861 A1**

(12) **EUROPEAN PATENT APPLICATION**

(43) Date of publication:
**26.06.2024 Bulletin 2024/26**

(21) Application number: **22216429.5**

(22) Date of filing: **23.12.2022**

(51) International Patent Classification (IPC):
*C11D 3/00* (2006.01)    *C11D 3/38* (2006.01)
*A01P 1/00* (2006.01)    *C11D 3/386* (2006.01)
*C11D 3/48* (2006.01)    *C11D 7/40* (2006.01)
*C11D 17/04* (2006.01)    *A01N 25/34* (2006.01)

(52) Cooperative Patent Classification (CPC):
(C-Sets available)
**C11D 17/049; A01N 65/20; A01N 65/22;
A01P 1/00; C11D 3/0068; C11D 3/381; C11D 3/48;
C11D 7/40;** C11D 3/386       (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Carl Freudenberg KG
69469 Weinheim (DE)**

(72) Inventors:
 • **von GROTE-PASTRÉ, Julia
 64625 Bensheim (DE)**
 • **BEDUE, Olivier
 69469 Weinheim (DE)**
 • **BORGMEIER, Claudia
 64673 Zwingenberg (DE)**

(74) Representative: **Fuchs Patentanwälte
Partnerschaft mbB
Tower 185
Friedrich-Ebert-Anlage 35-37
60327 Frankfurt am Main (DE)**

Remarks:
The complete document including Reference
Table(s) and the Sequence Listing(s) can be
downloaded from the EPO website

(54) **HOUSEHOLD AND/OR COMMERCIAL CLEANING ARTICLE**

(57) A household and/or commercial cleaning article having a textile layer, a foam or sponge layer, and/or an abrasive layer comprising at least one microorganism, or spore thereof, is disclosed wherein the microorganism, or spore thereof is capable of forming a metabolic biofilm on a surface of the household and/or commercial cleaning article. Also methods of producing said household and/or commercial cleaning article and uses thereof are disclosed.

Figure 1

**(Cont. next page)**

EP 4 389 861 A1

(52) Cooperative Patent Classification (CPC): (Cont.)

C-Sets
**A01N 25/34, A01N 63/22;**
**A01N 65/20, A01N 25/08, A01N 25/34;**
**A01N 65/22, A01N 25/08, A01N 25/34**

**Description**

Background

After use, household and/or commercial cleaning articles often comprise microorganisms, such as bacteria, fungi and algae which can develop biofilms on surfaces. Some of these biofilms can cause discomfort in the environment (such as for example malodour) or even cause health problems in animals and/or humans. This is particularly problematic in the case of household and/or commercial cleaning articles, the task of which is to keep other articles and/or surfaces clean. In this way, the household and/or commercial cleaning article can even transfer the negative effects of a biofilm to other surfaces that it is supposed to clean.

Conventional countermeasures against such harmful biofilms on household and/or commercial cleaning articles mostly focus on the eradication of the microorganisms including their biofilm, which, however, results in a tedious cleaning process due to the resistance of some microorganisms to chemicals, heat and other eradication methods. The cleaning process has to be repeated on a regular basis and the successful cleaning cannot be controlled easily due to the invisibility of the microorganisms and the biofilm.

Furthermore, household and/or commercial cleaning articles sometimes are not easily accessible on all surfaces such that retreats for the microorganisms are formed (e.g., when having a textile layer, a foam or sponge layer, and/or an abrasive layer), so that an accelerated regrowth from those niches occurs and a full eradication of the biofilm becomes impossible.

The only remaining solution is then often the disposal of the household and/or commercial cleaning article, which of course contradicts a sustainable way of life and is economically unreasonable. Another attempted solutions is to resort to ever more aggressive cleaning methods, which of course has negative effects on the environment and in itself may cause harm to animals or humans which come in contact with the household and/or commercial cleaning article.

Therefore, the need existed to provide effective means and/or methods for preventing the negative effects of microorganisms, such as for example malodour or health risks, on household and/or commercial cleaning articles, which are less damaging to the environment and harmless to animals and humans. These means and/or methods are provided by the present disclosure.

Summary of disclosure

In a first aspect, the disclosure pertains to a household and/or commercial cleaning article having a textile layer, and/or a foam or sponge layer, and/or an abrasive layer comprising at least one microorganism, or spore thereof, wherein the microorganism, or spore thereof is capable of forming a metabolic biofilm on a surface of the household and/or commercial cleaning article.

Surprisingly, it has been found that household and/or commercial cleaning articles comprising certain microorganisms, or spores thereof, are capable of forming a metabolic biofilm, i.e., a biofilm which can quickly degrade microbial waste products within the biofilm, which otherwise would cause discomfort (e.g., malodour) or even health problems. The advantage of this approach is that the biofilm stays on the surface for a long time, once the microorganisms, or spores thereof, are applied; and disinfectants, detergents or other for animals or humans potentially harmful substances are not needed. Furthermore, since in an optional embodiment the microorganism, or spore thereof, shares the abilities to withstand heat or chemical treatments as well as multiple washing steps with the other microorganisms in the biofilm on the household and/or commercial cleaning article, the treatment has a long-lasting, self-renewable property, which cannot be achieved by conventional methods and prolongs the usability of the household and/or commercial cleaning article.

In a second aspect, the disclosure pertains to a method of producing a household and/or commercial cleaning article having a textile layer, and/or a foam or sponge layer, and/or an abrasive layer comprising at least one microorganism, or spore thereof, wherein the microorganism, or spore thereof, is deposited onto the article before the article is brought into use.

In a third aspect, the disclosure pertains to a use of at least one microorganism, or spore thereof, being capable of forming a metabolic biofilm on a surface of the household and/or commercial cleaning article, for inhibiting or reducing malodour in and/or on the article.

In one embodiment a further advantage of using the household and/or commercial cleaning article comprising at least one microorganism, or spore thereof, capable of forming a metabolic biofilm on a surface of the household and/or commercial cleaning article is that during the cleaning process parts of the microorganism, or spore thereof, may be transferred to the cleaned surface, which then may expand its biofilm even to the cleaned areas and prevents malodour even on the cleaned surface for a longer time-period.

In a further aspect, the present disclosure relates to uses of the household and/or commercial cleaning article, for inhibiting or reducing malodour on a surface as compared to a household and/or commercial cleaning article not comprising the metabolic biofilm, corresponding to an odour difference of at least 0.3 grades, preferably of at least 0.5 grades, or most preferably of at least 1.0 grade in the VDA odour test.

Detailed description

The microorganism, or spore thereof, may be selected from a group consisting of at least one member of the *Bacillus subtilis group,* wherein the member of the *Bacillus subtilis group* is selected from the group consisting of *Bacillus amyloliquefaciens, Bacillus tequilensis, Bacillus subtilis, Bacillus atrophaeus, Bacillus vallismortis, Bacillus licheniformis, Bacillus sonorensis, and Bacillus mojavensis;* and/or a member of the *Priestia* (former *Bacillus*) megaterium, and/or a member of *Bacillus velezensis,* and/or a member of *Bacillus pumilus,* and/or a combination thereof.

The term *"Bacillus subtilis group"* as used herein means a sub-genus of the family *Bacillaceae,* genus *Bacillus,* comprising the species *Bacillus amyloliquefaciens, Bacillus tequilensis, Bacillus licheniformis, Bacillus subtilis, Bacillus atrophaeus, Bacillus vallismortis, Bacillus licheniformis, Bacillus sonorensis* and *Bacillus mojavensis subgroup.*

One of the microbial organisms of the *Bacillus subtilis group* is *Bacillus subtilis,* known also as the hay bacillus or grass bacillus, a Gram-positive, catalase-positive bacterium, found in soil and the gastrointestinal tract of ruminants and humans. As member of the genus *Bacillus, B. subtilis* is rod-shaped, and can form a tough, protective endospore, allowing it to tolerate extreme environmental conditions. B. *subtilis* has historically been classified as an obligate aerobe organism, though evidence exists that it is a facultative anaerobe. B. *subtilis* is considered the best studied Gram-positive bacterium and a model organism to study bacterial chromosome replication and cell differentiation.

The microbial organism of the present disclosure may be used in a vegetative form and/or as spores. Spores are resistant structures used by microorganisms for survival under unfavorable conditions. The ability to prepare spores and vegetative cells is considered routine in the art (Probiotics Antimicrob. Proteins, 2019 Sep; 11 (3):731-747). The term "spore" or "spore thereof" is used hereinafter for bacterial spores which are resistant structures used for survival under unfavourable conditions by the bacteria. In some publications the synonym "endospore" may be used. The microorganism, or spore thereof, may be probiotic.

Optionally, the microorganism, or spore thereof, is included in the list of QPS status recommended biological agents for safety risk assessments by the European food safety authority (ESA) as QPS-EFSA List 10.2903/j.efsa.2022.7408. This has the advantage that the microorganism itself does not represent any health risk and may be even used on surfaces of food-contact materials or in other health-sensitive areas. Alternatively, the microorganism, or spore thereof may fulfil the requirements necessary to be included in the QPS list.

In a further embodiment, the microorganism, or spore thereof, is heat-resistant, resistant to washing-drying cycles, hot washing, heat and/or to chemical stresses. Optionally, it passes at least one, at least two, at least three, or all four tests selected from:

    a. a hot washing test with a ratio of less than 100,

    b. a heat test with a ratio of less than 100,

    c. a chemical stress test with a ratio of less than 100,

    d. an amylase long-term polymer matrix test with a ratio of at least 1.5, and/or

    e. a protease long-term polymer matrix test with a ratio of at least 1.5.

In an embodiment, the microorganism, or spore thereof passes the hot washing test to the extent that the ratio is less than 100, less than 50, or less than 20.

In an embodiment, the microorganism, or spore thereof passes the heat test to the extent that the ratio is less than 100, less than 50, or less than 20.

In an embodiment, the microorganism, or spore thereof passes the chemical stress test to the extent that the ratio is less than 100, less than 50, or less than 20.

In an embodiment, the microorganism, or spore thereof passes the amylase long-term polymer matrix test to the extent that the ratio is at least 1.5, at least 4, or at least 8.

In an embodiment, the microorganism, or spore thereof passes the protease long-term polymer matrix test to the extent that the ratio is at least 1.5, at least 4, or at least 8.

Definitions

These and other standardized tests are further defined hereinafter:

**Capability of forming a metabolic biofilm**

A biofilm with metabolic activity is determined by the increased activity to convert resazurin to fluorescent resorufin as compared to a standard biofilm-forming microorganism *Bacillus subtilis* (Ehrenberg 1835) Cohn 1872; DSM-No. 402. Optionally, the metabolic activity in the biofilm is increased by at least 2 times, at least 3 times, at least 4 times, 5 times, at least 10 times, as compared to the standard microorganism *Bacillus subtilis* (Ehrenberg 1835) Cohn 1872; DSM-No. 402 ("DSM402" hereinafter).

The microorganism, or spore thereof as disclosed herein is defined to be capable of forming a metabolic biofilm, if the microorganism or spore scores a fluorescence which is at least twice as high as a fluorescence scored by DSM402 under the same experimental conditions.

The experimental conditions include

- sterilizing polyurethane (PU) foam cubes (1x1x1 cm, 25 mg) in an autoclave at 121°C for 20 minutes;

- putting the cubes into a deep well plate (DWP), one cube per well;

- filling 2 ml of sterilized medium into each of the wells that contain a cube, wherein the medium is composed of skim milk powder 0.8 g/L, soluble starch 4 g/L and olive oil 0.6 g/L;

- after 5 minutes, taking out cubes from DWP and transferring them to empty well of new DWP;

- inoculating each cube with 10 $\mu$l of inoculation solution, i.e. containing microorganisms or spores in PBS buffer (e.g. $10^5$ CFU of microorganism or spore under examination and the same amount of DSM402 [*Bacillus subtilis* (Ehrenberg 1835) Cohn 1872; DSM-No. 402]; at least 4 cubes each); additionally, leaving four cubes without inoculation as control;

- incubating the inoculated cubes for 7 days at 20°C;

- after 48 hours and 96 hours within those 7 days, applying additional 2 ml of medium to each well and transferring each cube to new well;

- after the 7 days, transferring cubes to a new DWP and washing by application of 4 ml saline (0.9%) to each well; transferring cubes into new DWP; repeat washing and transferring step an additional two times (three times in total);

- after washing, adding 2 ml of a resazurin-containing solution (e.g. PrestoBlue by Thermo Fisher Scientific, 10 % in medium) dye solution to the cubes in each well and incubating for 6 hours at 37°C;

- transferring 150 $\mu$l of each well into a microtitre plate (e.g., Costar 3904, Corning) and detecting fluorescence (e.g. using Fluostar, BMG) with the following parameters: excitation wavelength 440-412 nm, emission wavelength 590 nm, gain 15, prior mixing (5 sec, 1 mm orbital).

The mean values (MV) of fluorescence (arbitrary fluorescence units) are determined for each microorganism or spore and for control; MV of non-inoculated control is subtracted. Microorganisms and spores under investigation scoring at least twice the fluorescence value of DSM402 are capable of forming a metabolic biofilm.

**Determination of amylase activity**

Amylase activity is based on absorbance detection of a product of the underlying enzymatic reaction. Absolute and relative amylase activity can be determined.

The absolute amylase activity score is determined by an absorbance at 620 nm (cf. table 1 below). The test (Phadebas AB, Sweden) is based on a water-insoluble, cross-linked starch polymer substrate which is hydrolyzed by $\alpha$-amylase in the biofilm to form water-soluble blue fragments. The absorbance of the blue solution is a function of the $\alpha$-amylase activity in the sample.

The amylase activity test may be performed as follows:

- sterilizing polyurethane (PU) foam cubes (1x1x1 cm, 25 mg) in an autoclave at 121°C for 20 minutes;

- putting the cubes into a deep well plate (DWP), one cube per well;

- filling 2 ml of sterilized medium into each of the wells that contain a cube, wherein the medium is composed of pancreatic casein digest 10 g/L (e.g. Bacto Trypton, Thermo Fisher Scientific), NaCl 5 g/L, yeast extract 5 g/L (e.g. Bacto Yeast Extract, Thermo Fisher Scientific); glycerol 1%, $MnSO_4$ 0.1 mM (filter sterilized and supplemented after autoclaving);

- after 5 minutes, taking out cubes from DWP and transferring them to empty well of new DWP;

- inoculating each cube with 10 $\mu$l of inoculation solution, i.e. containing microorganisms or spores in PBS buffer (e.g. $10^5$ CFU of microorganism or spore under examination and the same amount of DSM402; at least 4 cubes each); additionally, leaving four cubes without inoculation as control;

- incubating the inoculated cubes for 20°C;

- after the 72 hours, transferring cubes to a new DWP and washing by application of 4 ml saline (0.9%) to each well; transferring cubes into new DWP; repeat washing and transferring step an additional two times (three times in total);

- after washing, adding 2.5 ml of an amylase-test-solution (e.g. Phadebas test solution; e.g. 9 Phasebas tablets dissolved in 65 ml of 2.4 g/L starch solution, sterilized by autoclaving) to the cubes in each well and incubating in a shaker for 2 hours at 37°C (e.g. Titramax, e.g. at shaking speed 7);

- transferring 200 $\mu$l of each well into 1.5 ml reaction tubes and centrifuging (5 min, 1500xg);

- transferring supernatant samples (100 $\mu$l) into 96 well microtitre plate (MTP) and measuring absorbance at 620 nm against deionized water; subtracting values measured for non-inoculated samples.

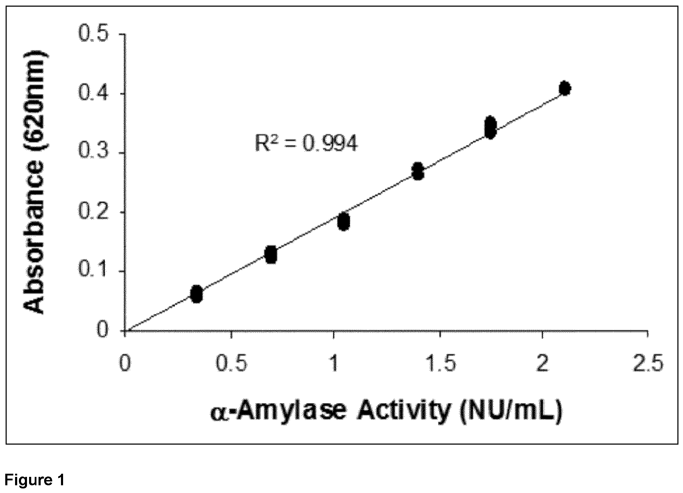

Figure 1 shows that there is a linear relationship between absorbance and enzymatic activity.

The absolute amylase activity score is determined in accordance with Table 1.

Table 1 - Comparison of absorbance and amylase activity score

| Absorbance | amylase activity score |
|---|---|
| 0 - 0.25 | 0 |
| 0.25 - 0.349 | 1 |
| 0.35 - 0.449 | 2 |
| 0.45 - 0.549 | 3 |
| 0.55 - 0.649 | 4 |
| 0.65 - 1 | 5 |

The relative amylase activity is determined by calculating the ratio of the absorbance-result of the microorganism or spore under investigation and that of DSM402 For example, an absorbance-result of 0.25 of the sample and an absorbance-result of 0.05 of DSM402 will result in 0.25/0.05, i.e., a relative amylase activity of 5:1.

The PU foam cubes used in this and the other tests discussed herein, may be selected from standard household sponges, e.g. made of soft polyurethane having a spatial weight 20 kg/m$^3$ and having about 20 pores cm$^{-1}$.

**Determination of protease activity**

Protease activity is based on absorbance detection of a product of the underlying enzymatic reaction. Absolute and relative protease activity can be determined.

The absolute protease activity score is determined by an absorbance at 440 nm of (cf. table 3 below). The test (Azocasein-test; Megazyme, Ireland) is based on an azocasein (azo-casein) substrate solution. The substrate is hydrolyzed by all endo-proteases which are active on casein to form a blue dye. The absorbance of the blue solution is a function of the protease activity in the sample.

The protease activity test may be performed as follows:

- sterilizing polyurethane (PU) foam cubes (1x1x1 cm, 25 mg) in an autoclave at 121°C for 20 minutes;

- putting the cubes into a deep well plate (DWP), one cube per well;

- filling 2 ml of sterilized medium into each of the wells that contain a cube, wherein the medium is composed of skim milk powder 0.8 g/L, soluble starch 4 g/L and olive oil 0.6 g/L;

- after 5 minutes, taking out cubes from DWP and transferring them to empty well of new DWP;

- inoculating each cube with 10 $\mu$l of inoculation solution, i.e. containing microorganisms or spores in PBS buffer (e.g. $10^5$ CFU of microorganism or spore under examination and the same amount of DSM402; at least 4 cubes each); additionally, leaving four cubes without inoculation as control;

- incubating the inoculated cubes for 7 days at 20°C;

- after 48 hours and 96 hours within those 7 days, applying additional 2 ml of medium to each well and transferring each cube to new well;

- after the 7 days, transferring cubes to a new DWP and washing by application of 4 ml saline (0.9%) to each well; transferring cubes into new DWP; repeat washing and transferring step an additional two times (three times in total);

- after washing, adding 2.5 ml of Azo-Casein (Megazyme, Ireland) solution to the cubes in each well, e.g. azo-casein solution may be prepared by mixing 26 ml medium (as above) and 39 ml azo-casein (0.8 g Azo-Casein powder reconstituted according to Manufacturer's instructions);

- incubating in a shaker for 6 hours at 37°C (e.g. Titramax, e.g. at shaking speed 7);

- transferring 150 $\mu$l of each well into 1.5 ml reaction tubes, adding 450 $\mu$l of TCA (5%) and centrifuging (5 min, 1500xg);

- transferring supernatant samples (150 $\mu$l) into 96 well microtitre plate (MTP) and measuring absorbance at 440 nm against deionized water; subtracting values measured for non-inoculated samples.

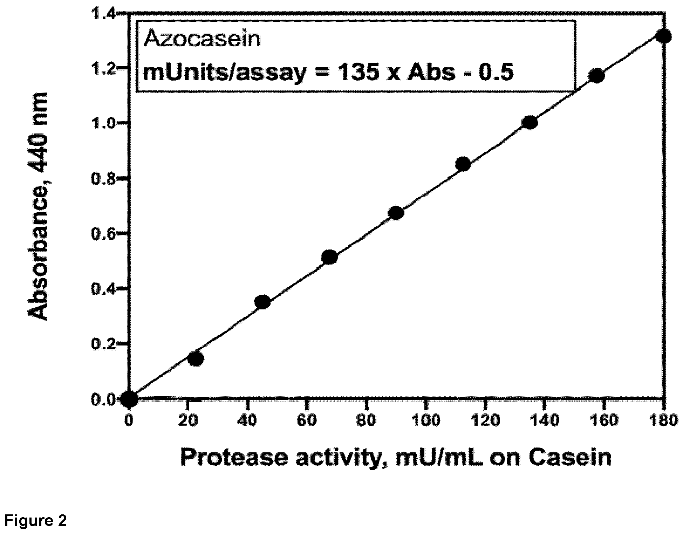

Figure 2 shows that there is a linear relationship between absorbance and enzymatic activity.

The absolute protease activity score is determined in accordance with Table 2.

The protease activity score then can be deduced from table 2.

Table 2. Comparison of absorbance and protease activity score

| absorbance | protease activity score |
|---|---|
| 0 - 0.25 | 0 |
| 0.25 - 0.349 | 1 |
| 0.35 - 0.449 | 2 |
| 0.45 - 0.549 | 3 |
| 0.55 - 0.649 | 4 |
| 0.65 - 1 | 5 |

The relative protease activity is determined by calculating the ratio of the absorbance-result of the microorganism or spore under investigation and that of DSM402 For example, an absorbance-result of 0.25 of the sample and an absorbance-result of 0.05 of DSM402 will result in 0.25/0.05, i.e., a relative protease activity of 5:1.

**CFU determination from surfaces and volumes**

To measure the concentration of colony forming units (CFU) on **surfaces** of an article, the microorganisms, or spores thereof, are sampled from the surface of the article by washing sections the surface of the article in 10 ml PBS-

buffer per 1 cm$^2$ surface area. The collected buffer solution is heat treated in a water bath at 80°C for 5 minutes.

The CFU/cm$^2$ can be determined by plating the 10 ml PBS-buffer on sterile tryptic soy agar plates (e.g. TSA-standard-plates) and incubating at 37°C for 24h. Colonies can then be counted and the CFU/cm$^2$ can be determined for each of the sections on that surface.

To measure the CFU in **volumes** of an article, microbial organisms, or spores thereof, are sampled from the article by immersing a section of 1 cm$^3$ of the article in 10 ml PBS-buffer. The collected buffer solution is heat treated in a water bath at 80°C for 5 minutes.

The 10 ml PBS-buffer solution is then plated on ready-to-use tryptic soy agar monitoring contact plates, e.g. TSA with LTH-Thio cont.-ICR+ (Merck-Millipore, USA) at 37°C for 24h. Colonies can then be counted and the CFU/cm$^3$ can be determined for each of the sections of that article.

The specific strain of the microbial organisms, or spores thereof, can be determined by the gDNA determination described below.

**gDNA determination**

After isolation and incubation of the contact plates for 24 h at 37°C as described before, colonies are harvested for identification with sterile 10 μl inoculating loops (Neolab Migge GmbH, Germany) and resuspended in 20 μl bacterial protein extraction reagent, e.g. aqueous nonionic detergent solution comprising 20 mM Tris-HCl at pH 7.5 including lysozyme and DNase (e.g. B-Per reagent, FisherScientific, USA).

After incubation for 15 min at 37°C, 30 μl MilliQ water are added and 1 μl of the mixture applied in a colony PCR targeting the *groEL* locus (Biosci Biotechnol Biochem.; 1992 Dec;56(12):1995-2002; doi: 10.1271/bbb.56.1995) as follows:

- 7.5 μL PCR Master Mix, e.g. Phusion Flash Mastermix (FisherScientific, Germany)

- 1 μL Primer groEL 60-A, 10 pmol/μl (5'-ACCCTGGGCCCGAGGGCCGCAACGTCGT) (Seq ID. No. 1)

- 1 μL Primer groEL 160-B, 10 pmol/μl (5'-TGACCGCGACGCCGCCCGCCAGCTTCGC) (Seq ID. No. 2)

- 4.5 μL MilliQ-Wasser

- 1 μL bacterial protein extraction reagent, e.g. aqueous nonionic detergent solution comprising 20 mM Tris-HCl at pH 7.5 including lysozyme and DNase (e.g. B-Per reagent, FisherScientific, USA)

The following PCR-protocol is used:

| PCR-Cycles | |
|---|---|
| Temperature | Minutes |
| 94°C | 01:00 |
| -----30 cycles of------ | |
| 94°C | 00:10 |
| 55°C | 00:20 |
| 72°C | 00:20 |
| --------------------- | |
| 72°C | 01:00 |
| 10°C | hold |

The 1.1 kb PCR product is subsequently sequenced for strain identification. By doing so, gDNA per cm$^3$ or per cm$^2$ as well as strain diversity can be determined.

**Hot washing test**

The number of CFUs/cm$^2$ of the microbial organism, or spores thereof, on a surface of 1 cm$^2$; or CFUs/cm$^3$ of

the microbial organism, or spores thereof, in volume of 1 cm$^3$ is determined according to the CFU-determination explained above. The surface or volume comprising the microbial organism, or spores thereof, is then washed in 10 ml PBS-buffer with a temperature of 80°C for 5 minutes.

Then the number of CFUs/cm$^2$ (or CFUs/cm$^3$) of the microbial organism, or spores thereof, is determined as shown above. The ratio between CFUs before and after the washing step is calculated.

Ratio = CFUs/cm$^2$ (or CFUs/cm$^3$) before washing step / CFUs/cm$^2$ (or CFUs/cm$^3$) after washing step.

If the ratio is less than 100, less than 50, or less than 20 the microbial organism, or spores thereof, has passed the hot washing test.

**Heat stress test**

The number of CFUs/cm$^2$ of the microbial organism, or spores thereof, on a surface of 1 cm$^2$; or CFUs/cm$^3$ of the microbial organism, or spores thereof, in volume of 1 cm$^3$ is determined according to the CFU-determination explained above.

The surface or volume comprising the microbial organism, or spores thereof, is then heated in a microwave for 5 minutes at 1000 Watt.

Then the number of CFUs/cm$^2$ (or CFUs/cm$^3$) of the microbial organism, or spores thereof, is determined again according to the CFU-determination explained above. The ratio between CFUs before and after the heating step is calculated.

Ratio = CFUs/cm$^2$ (or CFUs/cm$^3$) before the heating step / CFUs/cm$^2$ (or CFUs/cm$^3$) after the heating step.

If the ratio is less than 100, less than 50, or less than 20 the microbial organism, or spores thereof, has passed the heat test.

**Chemical stress test**

The number of CFUs/cm$^2$ of the microbial organism, or spores thereof, on a surface of 1 cm$^2$ or CFUs/cm$^3$ of the microbial organism, or spores thereof, in volume of 1 cm$^3$ is determined according to the CFU-determination explained above. The surface or volume comprising the microbial organism, or spores thereof, is then washed in 10 ml of PBS with 1 wt.-% hydrogen peroxide for 5 minutes.

Then the number of CFUs/cm$^2$ (or CFUs/cm$^3$) of the microbial organism, or spores thereof, is determined again according to the CFU-determination explained above. The ratio between CFUs before and after the washing step is calculated.

Ratio = CFUs/cm$^2$ (or CFUs/cm$^3$) before washing step / CFUs/cm$^2$ (or CFUs/cm$^3$) after washing step.

If the ratio is less than 100, less than 50, or less than 20 the microbial organism, or spores thereof, has passed the chemical stress test.

**Long-term polymer-matrix test**

The "long-term polymer-matrix test" is performed to evaluate whether a microorganism or spore therof is capable of maintaining amylase or protease activity even after a treatment that resembles actual use of an article, i.e. including multiple wet and dry cycles. The test is performed using cubes of 20 g of a sponge polymer-material made from soft polyurethane (PUR) foam material (spatial weight 20 kg/m$^3$, having 20 pores cm-'). The test compares amylase or protease activity after the cycles with the activity of non-inoculated cubes.

For the long-term polymer-matrix test ratio of the microbial organism, or spores thereof, one half of the sponge polymer-matrix cubes is treated with 10 ml of a PBS-solution comprising about 1 * 10$^5$ CFU/cm$^3$ of the microbial organism, or spores thereof, ("*sample*"), the other half of the sponge polymer-matrix cubes is not inoculated ("*control*").

Then each of the sponge polymer-matrix cubes (sample as well as control) is subjected to 45 wash and dry cycles.

Each wash and dry cycle consists of the following consecutive steps:

   a. submerging the sponge polymer-matrix cube for 2 minutes in washing liquid (composition below) at a temperature of 45°C;

   b. squeezing the sponge polymer-matrix cube three times while submerged in the washing liquid; wherein the cube is squeezed so far that the volume is reduced during squeezing by at least 50% of the volume of the material in "relaxed" (i.e., "un-squeezed" condition);

   c. squeezing the polymer-matrix cube one time outside the liquid; (squeezing outside the liquid is done until the cube has a weight that exceeds its dry weight before having been submerged in washing liquid by more than 100%, but less than 150%;

d. placing the sponge polymer-matrix cube on a draining rack at 20°C for 24 hours.

The washing liquid, as mentioned above, consists of 5 L water, 3 ml Triton® X 100 (4-(1,1,3,3-Tetramethylbutyl)-phenyl-polyethylenglykol), and 25 ml of a standard broth medium comprising:

- enzymatic digest of soybean 3.0 g/L (tryptic digest)
- sodium chloride 5.0 g/L
- dipotassium hydrogen phosphate 2.5 g/L
- glucose monohydrate 2.5 g/L
- wherein the standard broth medium is autoclaved before use at 121°C for 15 minutes;
- and is adjusted to a final pH: 7.3 $\pm$ 0.2 at 25°C.

At the end (after the last drying step) of the long-term polymer-matrix test, samples of the sponge polymer cubes are directly transferred into deep well plates and amylase and protease activity both of the "sample" as well as the "control" is determined as explained above.

The ratio of the long-term polymer-matrix test is then calculated from the resulting activity values as follows:

ratio of the amylase long-term polymer-matrix test = amylase activity ("sample") / amylase activity ("control")

ratio of the protease long-term polymer-matrix test = protease activity ("sample") / protease activity ("control").

A microbial organism, or spore thereof, is considered to pass the amylase long-term polymer-matrix test if the ratio is at least 1.5, at least 2, at least 3, at least 4, at least 5, at least 6, at least 7, at least 8, at least 9, at least 10.

A microbial organism, or spore thereof, is considered to pass the protease long-term polymer-matrix test if the ratio is at least 1.5, at least 2, at least 3, at least 4, at least 5, at least 6, at least 7, at least 8, at least 9, at least 10.

**VDA odour test**

Articles or surfaces, for example sponges, with or without the microbial organism, or spores thereof, were evaluated using an odour test which was performed essentially as described in the standard procedure VDA 270 ("*Bestimmung des Geruchsverhaltens von Werkstoffen der Kraftfahrceug-Innenausstattung*").

Samples are prepared according to the procedure described above for the long-term polymer matrix test. This means that the sponges have undergone the wash and dry cycles as described above, including step d. After that, the odour test is performed.

The odour test is performed at temperatures of 23°C +- 2°C. At least 24 hours before the test the dried sponges are kept at the same temperature in closed glass jars.

The procedure may be summarized as follows:

- Articles or surfaces, for example sponges, are placed in 250 ml clean glass jars with odourless sealing and screw cap
- Odour test is performed by at least 3 subjects (non-smoker, use of perfume or scented hand lotion precluded on that day) within one week; the same samples are tested by all subjects
- at least 3 reference samples are included in the test to assure that smelling capability of subjects are not restricted and to enable comparison between different odour tests.

The at least 3 subjects then grade the samples with grades from 1 to 6 (1 being the best), wherein the following grading principle is applied:

- Grade 1: smell not recognizable
- Grade 2: recognizable smell, but non-disturbing
- Grade 3: clearly recognizable smell, but still non-disturbing
- Grade 4: disturbing smell
- Grade 5: strong disturbing smell
- Grade 6: unbearable smell

A sample passes the VDA-odour test when the arithmetic median of the grades given to the sample by the at least 3 subjects show a grading of 3 or better (i.e., between grade 1 and 3).

In embodiments, more than 3 subjects take part in the test, e.g. at least 6, at least 12, at least 24, at least 48 or at least 96.

**Shannon Index**

The Shannon index, also known as Shannon's diversity index, Shannon-Wiener index, and (erroneously) Shannon-Weaver index is a measure originally proposed by Claude Shannon in 1948 to quantify the entropy (hence Shannon entropy) in strings of text. In present times, the Shannon-index is widely used in the area of ecology to describe the diversity of biomes.

The initial idea of the Shannon index was that the more letters there are, and the closer their proportional abundances in the string of interest, the more difficult it is to correctly predict which letter will be the next one in the string. The Shannon entropy quantifies the uncertainty (entropy or degree of surprise) associated with this prediction. It is most often calculated (including in this disclosure) as follows:

$$H' = -\sum_{i=1}^{R} p_i \ln p_i$$

where $p_i$ is the proportion of characters belonging to the i-th type of letter in the string of interest.

In ecology, $p_i$ is the proportion of individuals belonging to the i-th species in the dataset of interest. Thus, the Shannon entropy simply quantifies the uncertainty in predicting the species identity of an individual that is taken at random from the dataset. The higher this "uncertainty", the more diverse is the microbiome.

When all types in the dataset of interest are equally common, all $p_i$ values equal 1 / R, and the Shannon index hence takes the value ln(R). The more unequal the abundances of the types, the larger the weighted geometric mean of the $p_i$ values, and the smaller the corresponding Shannon entropy. If practically all abundance is concentrated to one type, and the other types are very rare (even if there are many of them), Shannon entropy approaches zero. When there is only one type in the dataset, Shannon entropy exactly equals zero (there is no uncertainty in predicting the type of the next randomly chosen entity).

PAST software v.3.01 can be used to calculate the Shannon index as published in H, Harper D, Ryan P. PAST-Palaeontological Statistics, ver. 1.89. Palaeontol Electron. 2001;4(1):1-9.

**Further definitions**

The term "surface roughness" as used herein is a component of surface texture. It is quantified by the deviations in the direction of the normal vector of a real surface from its ideal form. If these deviations are large, the surface is rough; if they are small, the surface is smooth. In surface metrology, roughness is typically considered to be the high-frequency, short-wavelength component of a measured surface. When dealing with the roughness profile, Ra is referred to as defined in DIN EN ISO 4287:2010-07.

The term "water contact angle" quantifies the wettability of a solid surface by a liquid via the Young equation. The water contact angle can be measured according to DIN 55660-2:2011-12, chapter 5.2.2. using a static method with a drop volume of 2 μl.

The term "surface" as used in this disclosure denotes an area forming the outside part or uppermost layer of an article, i.e. usually the interface of the article and the surrounding atmosphere. The surface area of particulate surfaces (e.g. powders or granules) or of porous surfaces may be measured by B.E.T.-measurement according to DIN ISO 9277:2022.

**Embodiments**

In one embodiment, the microorganism, or spore thereof, and/or the metabolic biofilm has amylase activity, i.e., shows the conversion of starch into sugar by the action of enzymes such as amylase. Amylase activity can be measured using the well-known Phadebas test. Amylase activity can be represented by an absolute amylase activity score and/or a relative amylase activity ratio. Optionally, the microorganism, or spore thereof, and/or the metabolic biofilm has an absolute amylase activity score of at least 1, at least 2, at least 3, or at least 4. In an embodiment, the absolute amylase activity score may range up to 5, or up to 4. For example, the relative amylase activity ratio may range from 1 to 5, from 2 to 5, from 3 to 4, or it may be about 3.

Alternatively, or in addition, the microorganism, or spore thereof, and/or the metabolic biofilm may have an amylase activity larger than an amylase activity of DSM402. Optionally, the relative amylase activity ratio of at least 5:1, at least 6:1, at least 7:1, or at least 8:1. In an embodiment, the relative amylase activity ratio may range up to 100:1, up to 50:1, up to 30:1, or up to 20:1. For example, the relative amylase activity ratio may range from 5:1 to 100:1, from 6:1 to 50:1, from 7:1 to 30:1, or from 8:1 to 20:1.

In one embodiment, the microorganism, or spore thereof, and/or the metabolic biofilm has protease activity, i.e., has the activity to breakdown proteins into smaller polypeptides or amino acids. Protease activity can be measured using well-known protease tests. This property can be represented by an absolute protease activity score and/or a relative protease activity ratio. Optionally, the microorganism, or spore thereof, and/or the metabolic biofilm has an absolute protease activity score of at least 1, at least 2, at least 3, or at least 4. In an embodiment, the absolute protease activity score may range up to 5, or up to 4. For example, the relative amylase activity ratio may range from 1 to 5, from 2 to 5, from 3 to 4, or it may be about 3 or about 4.

Alternatively, or in addition, the microorganism, or spore thereof, and/or the metabolic biofilm may have a protease activity larger than a protease activity of DSM402. Optionally, the metabolic biofilm has a relative protease activity ratio of at least 1.2:1, at least 1.5:1, at least 2:1, at least 2.5:1, at least 3:1, at least 4:1, or at least 5:1. In an embodiment, the relative protease activity ratio may range up to 100:1, up to 40:1, up to 20:1, or up to 13:1. For example, the relative amylase activity ratio may range from 1.2:1 to 100:1, from 1.5:1 to 40:1, from 2:1 to 20:1, or from 4:1 to 13:1.

In an embodiment, the microorganism, or spore thereof, does not have a negative impact on the diversity of the microbiome of the biofilm and is not a biocide. This is reflected by the alpha-diversity according to the Shannon-index, wherein a Shannon-index above 1.5 or higher shows a good diversity of microorganisms. This means that a metabolic biofilm as formed by the microorganism or spore thereof may have a Shannon index of more than 1.5. When referring to the microorganism or spore thereof having a Shannon index of more than X, it is meant that the Shannon index of a biofilm as obtained after the wash and dry cycles according to the long-term polymer matrix test described hereinabove. Thus, in a further embodiment, the microorganism, or spore thereof, and/or the metabolic biofilm has an alpha-diversity reflected by a Shannon-index of at least 1.5, of at least 1.8, of at least 2.25, of at least 2.8, of at least 3, of at least 4, of at least 5, or of at least 6. The diversity and the type of the individual microorganism may be determined by CFU and gDNA determination.

The household and/or commercial cleaning articles according to the present disclosure are selected from the group of cleaning sponges, cleaning pads (hand pads, machine pads), cleaning wipes, cleaning tissues, cleaning blocks, dirt erasers, etc. However, the household and/or commercial cleaning articles according to the present disclosure do not encompass cleaning articles for cosmetic use, such as make-up sponges, make-up cleaning pads (cosmetic pads), cotton swabs, etc. In an embodiment the household and/or commercial cleaning article refers to a modern cleaning sponge. A modern cleaning sponge is a tool or cleaning aid made of soft, porous material.

Typically used for cleaning impervious surfaces, sponges are especially good at absorbing water and water-based solutions. Cleaning sponges were originally made from natural sea sponges, however, they are most commonly made from synthetic materials today. Modern cleaning sponges are made of open-cell foams that can be foamed from various plastics, i.e., polymers, such as polyurethane, polyester, and the like.

In some embodiments the household and/or commercial cleaning articles of the present disclosure comprise soft surfaces (such as for example sponges, or fabrics), or hard surfaces (such as for example plastic, glass, wood, metal, stone or ceramic); and combinations thereof. In one embodiment any surface which can be found on a household and/or commercial cleaning article is encompassed.

The "household and/or commercial cleaning articles" according to the present disclosure has a textile layer, a foam or sponge layer, and/or an abrasive layer. The term "textile layer" as used herein encompasses woven and non-woven fabrics.

In one embodiment a "foam or sponge layer" is made of cellulose or polyurethane foam. The density of the foam or sponge layer may range from 10 to 50 $kg/m^3$, from 15 to 45 $kg/m^3$, or from 20 to 30 $kg/m^3$, in one embodiment about 20 $kg/m^3$.

The "porosity" is defined herein as the pore fraction of the article. That is, the ratio of pore space volume to bulk volume of the article. Porosity has no dimension and is usually expressed as a percentage:

$$\phi = V_{pore} / V_{bulk}$$

The porosity ranges from 5 to 90; from 15 to 75, from 20 to 50, or from 20 to 35. The number of pores per cm may be from 1 to 50 $cm^{-1}$, from 5 to 40 $cm^{-1}$, from 10 to 30 $cm^{-1}$, or in one embodiment about 20 $cm^{-1}$. The porosity is opened to allow sponge to absorb and release water easily and allow cleaning and rinsing.

In other embodiments the sponges of the present disclosure are made of biobased and or biodegradable materials such as those selected from wood pulp, cellulose, hemp fibers, cotton and combinations thereof.

In yet another embodiment the sponges of the present disclosure comprise and/or are made of metal meshs, such as scratch-resistant steel wool from steel straw (120 G) or made from stainless steel.

The sponges may further comprise an "abrasive layer" (i.e., a scouring fleece) to loosen hard in-crustations. The abrasive layer often consists of polymer fibers that can also be coated with hard mineral particles also called "abrasives" that are optionally fixed with the help of a binder and/or glue. Such abrasives may be selected from the group consisting of flint, quartz, corundum, emery, garnet, diamond, silicon carbide, chromium oxides, cubic boron nitride, and combinations thereof.

In one embodiment the "abrasive layer" is made of abrasive nonwoven material. The weight of the nonwoven material may be from 100 g/m$^2$ to 1000 g/m$^2$, from 200 g/m$^2$ to 800 g/m$^2$, from 300 g/m$^2$ to 700 g/m$^2$, or about 350 g/m$^2$. The thickness may range from 2 mm to 15 mm, from 5 mm to 10 mm, or about 7.5 mm. The abrasive layer consists in one embodiment of fibers (polyamide/polyester) glued together with polymer matrix and containing abrasive particles (generally silica or alumina) to allow dirt scouring and cleaning.

In yet another embodiment the household and/or commercial cleaning article comprises or consists of

synthetic fibers, including polyamide, polyester, polyvinyl alcohol, polyvinyl acetate, polyolefines, polycarbonates, glass, carbon, polylactic acid, polyacrylic, polyhydroxyal-canoates;

natural fibers, such as flax, linen, cotton, sisal, viscose, wool, kapok, hemp, chitosan, chitin; synthetic porous materials, such as polyurethane, polyvinyl acetate, polyvinyl alcohol, melamine, synthetic rubber; natural porous materials, such as cellulose, viscose, collagen, gelatin, glucomannan, natural rubber;

chemical binders, such as polyacrylic, polyvinyl acetate, phenol formaldehyde resins, urea formaldehyde resins, styrene butadiene rubbers;

natural binders, such as lignin, tannins, proteins, pectins, natural rubber, starch, gelatin, cellulose derivatives;

synthetic abrasives, such as acrylate, polyurethane, phenolic based resins;

natural particles, such as grinded nutshells, silica, alumina, carbonate, pumice

viscose, polyester, polyamide, polyvinyl acetate, polypropylene, cotton, cellulose or mixtures thereof; and/or

combinations thereof.

The dimensions of the sponge may range from 50 mm to 150 mm (length), from 80 mm to 110 mm (length); and/or optionally from 25 mm to 120 mm (width) or from 50 mm to 80 mm (width); and/or optionally from 5 mm to 100 mm (thickness); or from 15 mm to 50 mm (thickness). The length may be the longest extension, and the width may be the second longest in a direction perpendicular to the length. The foam can be cut in special nail guard shape to protect fingers. The features such as colors, shapes, dimensions, abrasivities, etc. may be adapted to the needs of the applications, customers and suppliers.

In one aspect the disclosure pertains to a household and/or commercial cleaning article wherein the article comprises at least one microorganism, or spore thereof, capable of forming a biofilm with metabolic activity on a surface of the household and/or commercial cleaning article.

A sponge can be a medium for the growth of harmful bacteria, especially when it is allowed to remain wet between uses.

Several methods have been used to clean sponges. Studies have investigated the use of the microwave to clean non-metallic domestic sponges that have been thoroughly moistened. A 2006 study found that microwaving wet sponges for two minutes (at 1000-watt power) killed 99% of coliforms, *E. coli,* and MS2 phages, but other species survived. Unfortunately, species producing harmful waste-products are among the species surviving such a treatment. It is a surprising finding of the present disclosure that also the microorganisms, or spores thereof, disclosed herein, survive both heat treatments as well as regular washing and rinsing treatments. Thus, they are particularly suitable to facilitate the formation of a metabolic biofilm in the household and/or commercial cleaning article.

The household and/or commercial cleaning article according to the disclosure comprises a surface. Optionally, the household and/or commercial cleaning article according to the disclosure has at least one surface with a textile layer, a foam or sponge layer, and/or an abrasive layer.

In general, all surfaces which are susceptible to having biofilms are included. In one embodiment the microorganism, or spore thereof, is applied to or disposed on a surface of the article, wherein preferably the surface may be characterized by a surface roughness of at least 1 $\mu$m Ra, at least 2 $\mu$m Ra, at least 3 $\mu$m Ra, at least 5 $\mu$m Ra, at least 8 $\mu$m Ra, at least 10 $\mu$m Ra, at least 12 $\mu$m Ra, or at least 15 $\mu$m Ra.

In one embodiment, the microorganism, or spore thereof, is applied to or disposed on a surface of the household and/or commercial cleaning article which has a minimum hydrophilicity defined by a water contact angle of less than 80°. In other embodiments a water contact angle of less than 60°, a water contact angle of less than 45°, a water contact angle of less than 30°, a water contact angle of less than 15° or less. In one embodiment the water contact angle is 0° and the surface is considered hydrophilic.

The surface of the household and/or commercial cleaning article may be selected from a material comprising or consisting of

synthetic fibers, including polyamide, polyester, polyvinyl alcohol, polyvinyl acetate, polyolefines, polycarbonates, glass, carbon, polylactic acid, polyacrylic, polyhydroxyal-canoates, polylacticacid;

natural fibers, such as flax, linen, cotton, sisal, viscose, wool, kapok, hemp, chitosan, chitin; synthetic porous materials, such as polyurethane, polyvinyl acetate, polyvinyl alcohol, melamine, synthetic rubber; natural porous materials, such as cellulose, viscose, collagen, gelatin, glucomannan, natural rubber;

chemical binders, such as polyacrylic, polyvinylacetate, phenol formaldehyde resins, urea formaldehyde resins, styrene butadiene rubbers;

natural binders, such as lignin, tannins, proteins, pectins, natural rubber, starch, gelatin, cellulose derivatives;

synthetic abrasives, such as acrylate, polyurethane, phenolic based resins;

natural particles, such as grinded nutshells, silica, alumina, carbonate, pumice

viscose, polyester, polyamide, polyvinyl acetate, polypropylene, cotton, cellulose or mixtures thereof; and/or

combinations thereof.

The article may be a kitchen sponge, or kitchen towel.

Thus, in a further embodiment the disclosure pertains to a household and/or commercial cleaning article comprising the microorganism, or spore thereof, capable of forming a metabolic biofilm, wherein the microorganism, or spore thereof, is optionally

a. applied to or disposed on a surface that is susceptible to having biofilms,

b. applied to or disposed on a surface having a surface roughness of at least 1 $\mu$m Ra;

c. applied to or disposed on a surface that has a minimum hydrophilicity defined by a water contact angle of less than 80°;

d. applied to or disposed on a surface that is selected from the group consisting of biologic, polymeric, organic or inorganic surface, and/or

e. applied to or disposed on a surface by injecting, impregnating, immersing, spraying, printing, calendaring, and/or dipping process followed by drying.

In another embodiment, the concentration of the microorganism, or spore thereof, on the household and/or commercial cleaning article is determined.

The microorganism, or spore thereof, may be present on the surface of the household and/or commercial cleaning article in a concentration of about $1 \times 10^2$ to $1 \times 10^{10}$ "colony forming units per surface" i.e., in CFU/cm². In a further embodiment, the microorganism, or spore thereof, is present on the surface of the household and/or commercial cleaning article in a concentration of about $1 * 10^2$ to $1 * 10^9$ CFU/cm², optionally in a concentration of about $1 * 10^4$ to $1 * 10^8$ CFU/cm², or in a concentration of about $1 * 10^6$ to $1 * 10^8$ CFU/cm², in yet further embodiment in a concentration of about $1 \times 10^7$ CFU/cm².

In another embodiment, the microorganism, or spore thereof, is determined within a volume of household and/or commercial cleaning article. For example, in case of very porous articles, such as kitchen-sponges, the microorganism, or spore thereof, is better characterized by the CFU per volume of the article, i.e., in CFU/cm³. The microorganism, or spore thereof, may be present in these cases in the household and/or commercial cleaning article in a concentration of

about $1 \times 10^2$ to $1 \times 10^{10}$ CFU/cm$^3$. In a further embodiment the microorganism, or spore thereof, is present in a concentration of about $1 * 10^3$ to $1 * 10^9$ CFU/cm$^3$, preferably in a concentration of about $1 * 10^4$ to $1 * 10^8$ CFU/cm$^3$, or in a concentration of about $1 * 10^6$ to $1 * 10^8$ CFU/cm$^3$, in yet further embodiment in a concentration of about $1 \times 10^7$ CFU/cm$^3$.

In one embodiment the concentration of the microorganism, or spore thereof, on the household and/or commercial cleaning article can be described in ng gDNA / cm$^3$. In preferred embodiments the microorganism, or spore thereof, is present with at least 1 ng gDNA / cm$^3$, at least 5 ng gDNA / cm$^3$, at least 10 ng gDNA / cm$^3$, at least 15 ng gDNA / cm$^3$, or at least 25 ng gDNA / cm$^3$.

## Description of the Figures

**Figure 1** -    Standard curve depicting the relationship of $\alpha$-amylase activity (U/l) and absorption in an amylase activity test.

**Figure 2** -    Standard curve depicting the relationship of Subtilisin A activity and absorption in a protease test, the standard curve is linear up to an absorbance of 1.00.

## Examples

### Example 1: Determination of biofilm establishment

Multiple candidate microorganisms and spores thereof were investigated for their capability of forming a metabolic biofilm. Except #18 (Priestia megaterium), all candidates were B. subtilis.

PU foam cubes (1x1x1 cm, ca. 25 mg) were distributed into single wells of 24-deepwell plates (DWP) and sterilized by autoclaving for 20 min at 121°C. Each well was subsequently filled with 2 ml medium (skim milk powder 0.8 g/L, soluble starch 4 g/L, olive oil 0.6 g/L, sterilized by autoclaving). After 5 min. incubation, each cube was then picked up with tweezers and transferred into an empty well of a new DWP. Each cube was subsequently inoculated (4 replicates per candidate strain) by pipetting 10 μl spores suspension (1E+05 CFU, in PBS buffer) onto the surface, non-inoculated cubes served as control. Inoculated cubes are incubated at 20°C for 7 days. After 2 and 4 days within the 7 day period, medium was again applied to each well as above and cubes were subsequently transferred to a new DWP.

After 7 days, cubes were washed by applying 4 ml saline (0.9%) into each well and subsequent transfer with tweezers into a new DWP. This step was repeated two times. After washing, 2 ml of PrestoBlue (Thermo Fisher Scientific) dye solution (10 % in medium) was applied to the cubes in each well and the DWP was incubated for 6 hours at 37°C. Metabolic activity of biofilms was assessed by transferring 150 μl of each well into a microtitre plate (e.g., Costar 3904, Corning) and fluorescence detection (Fluostar, BMG) with the following parameters: Excitation wavelength 440-412 nm, emission wavelength 590 nm, gain 15, prior mixing (5 sec, 1 mm orbital). The mean values (MV) obtained (arbitrary fluorescence units) of suitable candidates should reach a minimum of 30.000 (after subtraction of MV of non-inoculated control) or a minimum of $2\times$ mean values obtained for control strain (DSM402) treated in the same way. Microorganisms scoring at least 2x mean values obtained for control strain (DSM402) are considered capable of forming a metabolic biofilm.

Table 3: Fluorescence intensities (arbitrary units, AU) of biofilms inoculated from spores and grown in PU cubes for 7 days

| Strain | #18 (AU) - (ratio) | | #50 (AU) - (ratio) | | #46 (AU) - (ratio) | | DSM402 (AU) - (ratio) | |
|---|---|---|---|---|---|---|---|---|
| Replicate 1 | 39868 | 16.7 | 13799 | 5.8 | 30947 | 13 | 2397 | 1 |
| Replicate 2 | 52591 | 5.1 | 35926 | 3.5 | 52772 | 5.2 | 10240 | 1 |
| Replicate 3 | 39302 | 4.3 | 41076 | 45 | 35054 | 3.9 | 9082 | 1 |
| Replicate 4 | 38357 | 6.3 | 40917 | 6.7 | 3289 | 0.5 | 6104 | 1 |
| MV | 42530 | 6.1 | 32930 | 4.7 | 30516 | 4.4 | 6956 | 1 |
| Strains #18, #50 and #46 develop biofilms with an average metabolic activity of a fluorescence of at least 2-times higher intensity as compared to DSM-402. | | | | | | | | |

**Example 2: Amylase activity**

PU foam cubes (1x1x1cm, ca. 25 mg) were distributed into single wells of 24 well deepwell plates (DWP) and sterilized by autoclaving for 20 min at 121°C. Each well was subsequently filled with 2 ml medium (Bacto Tryptone 10 g/L, NaCl 5 g/L, Bacto Yeast Extract 5 g/L, sterilized by autoclaving; glycerol 1%, $MnSO_4$ 0.1 mM, filter sterilized and supplemented after autoclaving). After 5 min incubation, each cube was then picked up with tweezers and transferred into an empty well of a new DWP. Each cube was subsequently inoculated (4 replicates per candidate strain) by pipetting 10 μl spores suspension (1E+05 CFU, in PBS buffer) onto the surface, non-inoculated cubes served as sterile control. Inoculated cubes were incubated at 20°C. After 72 hours, cubes were washed by applying 4 ml saline (0.9%) into each well and subsequent transfer with tweezers into a new DWP. This step was repeated two times. After washing, 2.5 ml of Phadebas solution (9 Phadebas tablets were dissolved in 65 ml of a 2.4 g/L starch solution, sterilized by autoclaving) are added to each well. The DWP is incubated at 37°C on a Titramax at shaking speed 7 for 2 hours. From each well 200 μl samples are subsequently transferred into 1.5 ml reaction tubes and centrifuged (5 min, 1500 g). Supernatant samples (100 μl) were transferred into a 96 well microtitre plate (MTP) and the absorbance is measured at 620 nm against deionized water (when absorbance exceeds the measuring capability of the photometer, supernatant is diluted 10-fold using deionized water).

Table 4: Absorbance values (620nm) of amylase assays using biofilms inoculated from spores and grown in PU cubes for 72 hours.

| Strain | #50 (Abs.) | #50 (ratio) | DSM402 (Abs.) | DSM402 (ratio) |
|---|---|---|---|---|
| Replicate 1 | 0.501 | 6.5 | 0.077 | 1 |
| Replicate 2 | 0.394 | 13.1 | 0.030 | 1 |
| Replicate 3 | 0.529 | 6.8 | 0.078 | 1 |
| Replicate 4 | 0.443 | 13 | 0.034 | 1 |
| **MV** | **0.467** | **8.5** | **0.055** | 1 |

**Example 3: Protease activity**

PU foam cubes (1x1x1cm, ca. 25 mg) were distributed into single wells of 24 well deepwell plates (DWP) and sterilized by autoclaving for 20 min at 121°C. Each well was subsequently filled with 2 ml medium (skim milk powder 0.8 g/L, soluble starch 4 g/L, olive oil 0.6 g/L, sterilized by autoclaving). After 5 min incubation, each cube was then picked up with tweezers and transferred into an empty well of a new DWP. Each cube was subsequently inoculated (4 replicates per candidate strain) by pipetting 10 μl spores suspension (1E05 CFU, in PBS buffer) onto the surface, non-inoculated cubes served as control. Inoculated cubes were incubated at 20°C for 7 days. After 2 and 4 days, medium was again applied to each well as above and cubes were subsequently transferred to a new DWP. After 7 days, cubes were washed by applying 4 ml saline (0.9%) into each well and subsequent transfer with tweezers into a new DWP. This step was repeated two times. After washing, 2.5 ml of Azo-Casein (Megazyme, Ireland) solution were added to each well. Azo-Casein solution was prepared by mixing 26 ml medium (as above) and 39 ml Azo-Casein (0.8 g Azo-Casein powder reconstituted according to Manufacturer's instructions). The DWP was incubated at 37°C on a Titramax at shaking speed 7 for 6 hours. From each well 150 μl samples were subsequently transferred into 1.5 ml reaction tubes, 450 μl TCA (5%) were added, mixed by inverting and the tubes were centrifuged (5 min, 1500 g). Supernatant samples (150 μl) were transferred into a 96 well microtitre plate (MTP) and the absorbance was measured at 440 nm against deionized water (when absorbance exceeds the measuring capability of the photometer, supernatant is diluted 10-fold using deionized water).

Table 5: Absorbance values (440 nm) of protease assays using biofilms inoculated from spores and grown in PU cubes for 7 days.

| Strain | #18 (Abs.) | #18 (ratio) | DSM402 (Abs.) | #DSM402 (ratio) |
|---|---|---|---|---|
| Replicate 1 | 0.509 | 4.3 | 0.119 | 1 |
| Replicate 2 | 0.520 | 4.4 | 0.118 | 1 |
| Replicate 3 | 0.409 | 4.17 | 0.098 | 1 |
| Replicate 4 | 0.629 | 10 | 0.063 | 1 |

(continued)

| Strain | #18 (Abs.) | #18 (ratio) | DSM402 (Abs.) | #DSM402 (ratio) |
|--------|-----------|-------------|---------------|-----------------|
| **MV** | **0.517** | **5.17** | **0.100** | **1** |

**Example 4: Long-term polymer-matrix test: Amylase activity**

A long-term polymer matrix test was performed in order to evaluate the presence of amylase activity after simulated use of the article, e.g. in the context of a household article with repeated wet and dry cycles. Initially, the long-term polymer matrix test was performed as described hereinabove, i.e. steps a. through d. After step d., sponges were harvested from the long-term polymer-matrix test by letting them dry completely without washing for 2 days at 22-25°C. Sponges can subsequently be stored in an airtight container for up to 4 weeks.

For enzyme assessment, dried sponges were divided into 8 equal parts and each 1/8 fragment was reactivated by immersing in 50 ml medium (skim milk powder 0.8 g/L, soluble starch 4 g/L, olive oil 0.6 g/L, sterilized by autoclaving). After incubation for 5 min, sponges were squeezed and air dried for 2 days at 22-25°C. Each 1/8 fragment was cut into 4 equal parts which were transferred into a 100 ml glass shake flask. Each shake flask was filled with 15 ml deionized water, 10 ml soluble starch solution (4 g/L, sterilized by autoclaving) and 3 Phadebas tablets (Phadebas AB, Sweden) were added. Shake flasks were incubated at 37°C, 250 rpm for 16 hours. From each shake flask, 500 $\mu$l liquid was transferred into a 1.5 ml tube and centrifuged at 16000xg for 2 min. 100 $\mu$l of supernatant was transferred into a 96-well microtitre plate (MTP) and the absorbance was measured at 620 nm against deionized water (when absorbance exceeds the measuring capability of the photometer, supernatant is diluted 10-fold using deionized water). The relative activities of sponges inoculated with candidates are calculated as follows: absorbance (inoculated sponge) / absorbance (non-inoculated sponge).

Table 6: Relative amylase activities

| Strain Inoculum | Control | #14 | #18 | #38 | #42 | #46 | #50 |
|---|---|---|---|---|---|---|---|
| Control (non-inoculated sample) = 1, candidates #14, #18, #38, #42, #46, #50 inoculated before the start of test, harvested after 6 weeks for long-term polymer matrix test. | | | | | | | |
| MV | 100 | 1.53 | 3.86 | 2.93 | 1.62 | 1.23 | 20.68 |

**Example 5: Long-term polymer-matrix test: Protease activity**

A long-term polymer matrix test was performed in order to evaluate the presence of protease activity after simulated use of the article, e.g. in the context of a household article with repeated wet and dry cycles. Initially, the long-term polymer matrix test was performed as described hereinabove, i.e. steps a. through d. After step d., sponges were harvested from the long-term polymer-matrix test by letting them dry completely without washing for 2 days at 22-25°C. Sponges can subsequently be stored in an airtight container for up to 4 weeks.

For enzyme assessment, dried sponges were divided into 8 equal parts and each 1/8 fragment was reactivated by immersing in 50 ml medium (skim milk powder 0.8 g/L, soluble starch 4 g/L, olive oil 0.6 g/L, sterilized by autoclaving). After incubation for 5 min, sponges were squeezed and air dried for 2 days at 22-25°C. Each 1/8 fragment was cut into 4 equal parts which were transferred into a 100 ml glass shake flask. Each shake flask was filled with 25 ml medium (skim milk powder 0.8 g/L, soluble starch 4 g/L, olive oil 0.6 g/L, sterilized by autoclaving) and incubated at 28°C 250 rpm for 16 hours. 15 ml of the liquid was removed from each shake flask and 15 ml azo-casein solution (2% prepared according to Manufacturer's instructions, Megazyme, Ireland) were added. The shake flasks were incubated at 37°C 250 rpm for 2 hours. 150 $\mu$l liquid from each shake flask was subsequently filled into a 1.5 ml tube, 450 $\mu$l TCA (5%) were added and samples were incubated for 5 min at room temperature. After centrifugation at 16000xg for 2 min, 200 $\mu$l supernatant were transferred into a 96-well microtitre plate (MTP) and the absorbance measured at 440 nm against deionized water (when absorbance exceeds the measuring capability of the photometer, supernatant is diluted 10-fold using deionized water). The relative activities of sponges inoculated with candidates are calculated as follows: absorbance (inoculated sponge) / absorbance (non-inoculated sponge).

Table 7: Relative protease activities

| Control (non-inoculated sample) = 1; candidates #14, #18, #38, #42, #46, #50 inoculated before the start of test, harvested after 6 weeks for long-term polymer matrix test. | | | | | | | |
|---|---|---|---|---|---|---|---|
| **Strain Inoculum** | **Control** | **#14** | **#18** | **#38** | **#42** | **#46** | **#50** |
| MW | 100 | 0.67 | 2.56 | 1.09 | 1.45 | 1.71 | 1.18 |

**Claims**

1. A household and/or commercial cleaning article having a textile layer, and/or a foam or sponge layer, and/or an abrasive layer comprising at least one microorganism, or spore thereof,
wherein the microorganism, or spore thereof is capable of forming a metabolic biofilm on a surface of the household and/or commercial cleaning article.

2. The household and/or commercial cleaning article according to claim 1, wherein the metabolic biofilm has a metabolic activity of at least 2-fold as compared to a standard organism *Bacillus subtilis* DSM-No. 402.

3. The household and/or commercial cleaning article according to any of claims 1 or 2, wherein the metabolic biofilm has amylase activity, wherein optionally

   a. the metabolic biofilm has an absolute amylase activity score of at least 1 and/or
   b. the metabolic biofilm has a relative amylase activity ratio of at least 5:1.

4. The household and/or commercial cleaning article according to any of the previous claims, wherein the metabolic biofilm has protease activity, wherein preferably

   a. the metabolic biofilm has an absolute protease activity score of at least 1, and/or
   b. the metabolic biofilm has a relative protease activity ratio of at least 1.2:1.

5. The household and/or commercial cleaning article according to any of the previous claims, wherein the metabolic biofilm has an alpha-diversity reflected by a Shannon-index of at least 1.5, at least 1.8, or at least 2.

6. The household and/or commercial cleaning article according to any of the previous claims, wherein the article comprises at least one microorganism, or spore thereof, is selected of a group consisting of
at least one member of the *Bacillus subtilis* group, wherein the member *Bacillus subtilis group* is selected from a member of the group consisting of *Bacillus amyloliquefaciens, Bacillus tequilensis, Bacillus subtilis, Bacillus atrophaeus, Bacillus vallismortis, Bacillus licheniformis, Bacillus sonorensis and Bacillus mojavensis;*
and/or a member of the *Priestia* (former *Bacillus*) megaterium, and/or a member of *Bacillus velezensis,* and/or a member of *Bacillus pumilus,* and/or a mixture or combination thereof.

7. The household and/or commercial cleaning article according to claim 6 wherein the at least one microorganism, or spore thereof, is either included in the list of QPS status recommended biological agents for safety risk assessments as published by the European food safety authority as QPS-EFSA List 10.2903/j.efsa.2022.7408, or fulfils all the requirements to be included in said list.

8. The household and/or commercial cleaning article according to any of any of the previous claims, having the metabolic biofilm resulting in an odor difference as compared to a household and/or commercial cleaning article without the metabolic biofilm of at least 0.3 grades, at least 0.5 grades, or at least 1.0 grade in the VDA odour test.

9. The household and/or commercial cleaning article according to any of the previous claims, wherein the microbial organism, or spore thereof, passes at least one test selected from

   a. a hot washing test with a ratio of less than 100,
   b. a heat test with a ratio of less than 100,
   c. a chemical stress test with a ratio of less than 100,

d. an amylase polymer matrix test with a ratio of at least 1.5, and/or
e. a protease polymer matrix test with a ratio of at least 1.5.

10. The household and/or commercial cleaning article according to any of the previous claims, wherein the microorganism, or spore thereof, is present on at least one surface-section of 1 cm$^2$ of the surface of the article in a concentration of about 1 * 10$^2$ to 1 * 10$^{10}$ CFU/cm$^2$ and/or in at least one volume-section of 1 cm$^3$ of the article in a concentration of about 1 * 10$^2$ to 1 * 10$^{10}$ CFU/cm$^3$.

11. The household and/or commercial cleaning article according to any of the previous claims, wherein the material of the cleaning article comprises or consists of

synthetic fibers, including polyamide, polyester, polyvinyl alcohol, polyvinyl acetate, polyolefines, polycarbonates, glass, carbon, polylactic acid, polyacrylic, polyhydroxyal-canoates;
natural fibers, such as flax, linen, cotton, sisal, viscose, wool, kapok, hemp, chitosan, chitin; synthetic porous materials, such as polyurethane, polyvinyl acetate, polyvinyl alcohol, melamine, synthetic rubber; natural porous materials, such as cellulose, viscose, collagen, gelatin, glucomannan, natural rubber;
chemical binders, such as polyacrylic, polyvinylacetate, phenol formaldehyde resins, urea formaldehyde resins, styrene butadiene rubbers;
natural binders, such as lignin, tannins, proteins, pectins, natural rubber, starch, gelatin, cellulose derivatives;
synthetic abrasives, such as acrylate, polyurethane, phenolic based resins;
natural particles, such as grinded nutshells, silica, alumina, carbonate, pumice
viscose, polyester, polyamide, polyvinyl acetate, polypropylene, cotton, cellulose or mixtures thereof; and/or combinations thereof.

12. Method of producing a household and/or commercial cleaning article having a textile layer, and/or a foam or sponge layer, and/or an abrasive layer comprising at least one microorganism, or spore thereof, including depositing the microorganism, or spore thereof, onto the article or to parts of the article before the article is brought into use.

13. The method according to claim 12, wherein the at least one microorganism, or spore thereof, is applied to the household and/or commercial cleaning article by injecting, impregnating, immersing, spraying, printing, calendaring, and/or dipping process, optionally followed by drying.

14. Use of at least one microorganism, or spore thereof, being capable of forming a metabolic biofilm on a surface of the household and/or commercial cleaning article according to one of claims 1 to 11, for inhibiting or reducing malodour in and/or on the article and/or wherein the malodour is inhibited or reduced by at least 0.3 grades, at least 0.5 grades, or at least 1.0 grade in the VDA odour test.

**Figure 1**

Figure 2

Europäisches
Patentamt

European
Patent Office

Office européen
des brevets

## EUROPEAN SEARCH REPORT

Application Number

EP 22 21 6429

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/157773 A1 (HENKEL AG & CO KGAA [DE]) 21 September 2017 (2017-09-21) * claims 1-5; example 3 * | 1-9, 12-14 | INV. C11D3/00 C11D3/38 A01P1/00 C11D3/386 C11D3/48 C11D7/40 C11D17/04 A01N25/34 |
| X | US 2013/210061 A1 (MITANI ASAKO [JP] ET AL) 15 August 2013 (2013-08-15) * paragraphs [44;62] - [0094]; claims 1-4; table 4 * | 1-9, 11-14 | |
| X | WO 2013/171343 A2 (EDMIRE BVBA [BE]) 21 November 2013 (2013-11-21) * page 6 and 7, bridging paragraph; claims 1,8,11 * | 1-9, 11-14 | |
| X | US 2018/325117 A1 (HOLMES GARY [US]) 15 November 2018 (2018-11-15) * paragraph [11;148;319]; claims 1,8,13 * | 1-9, 11-14 | |
| X | CN 111 808 778 A (UNIV NORTHEAST AGRICULTURAL) 23 October 2020 (2020-10-23) * examples 1,4; table 6 * | 1-11 | |
| E | WO 2022/268985 A1 (FREUDENBERG CARL KG [DE]) 29 December 2022 (2022-12-29) * page 7, paragraph 4; claims 1,4-14 * | 1-14 | **TECHNICAL FIELDS SEARCHED (IPC)** C11D A01P A01N |

The present search report has been drawn up for all claims

| Place of search | Date of completion of the search | Examiner |
|---|---|---|
| The Hague | 31 May 2023 | Douelle, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 6429

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2023

| Patent document cited in search report | | Publication date | Patent family member(s) | | Publication date |
|---|---|---|---|---|---|
| WO 2017157773 | A1 | 21-09-2017 | EP | 3430117 A1 | 23-01-2019 |
| | | | ES | 2798926 T3 | 14-12-2020 |
| | | | PL | 3430117 T3 | 16-11-2020 |
| | | | US | 2019085267 A1 | 21-03-2019 |
| | | | WO | 2017157773 A1 | 21-09-2017 |
| US 2013210061 | A1 | 15-08-2013 | AU | 2011306115 A1 | 02-05-2013 |
| | | | CN | 103270415 A | 28-08-2013 |
| | | | EP | 2620769 A1 | 31-07-2013 |
| | | | JP | 5670810 B2 | 18-02-2015 |
| | | | JP | 2012088297 A | 10-05-2012 |
| | | | SG | 188430 A1 | 30-04-2013 |
| | | | TW | 201217779 A | 01-05-2012 |
| | | | US | 2013210061 A1 | 15-08-2013 |
| | | | WO | 2012039261 A1 | 29-03-2012 |
| WO 2013171343 | A2 | 21-11-2013 | NONE | | |
| US 2018325117 | A1 | 15-11-2018 | AU | 2016344406 A1 | 31-05-2018 |
| | | | CA | 3002788 A1 | 04-05-2017 |
| | | | CN | 108347947 A | 31-07-2018 |
| | | | EP | 3370528 A1 | 12-09-2018 |
| | | | JP | 6790104 B2 | 25-11-2020 |
| | | | JP | 2019502748 A | 31-01-2019 |
| | | | US | 2018325117 A1 | 15-11-2018 |
| | | | WO | 2017074485 A1 | 04-05-2017 |
| | | | ZA | 201803451 B | 28-08-2019 |
| CN 111808778 | A | 23-10-2020 | NONE | | |
| WO 2022268985 | A1 | 29-12-2022 | EP | 4108751 A1 | 28-12-2022 |
| | | | WO | 2022268985 A1 | 29-12-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Probiotics Antimicrob. Proteins,* September 2019, vol. 11 (3), 731-747
- *Biosci Biotechnol Biochem.,* December 1992, vol. 56 (12), 1995-2002
- **H, HARPER D ; RYAN P.** PAST-Palaeontological Statistics. *Palaeontol Electron.,* 2001, vol. 4 (1), 1-9